# EUROPEAN PATENT APPLICATION

(11) **EP 0 791 821 A1**
(43) Date of publication of application: **27.08.1997**
(21) Application number: 96930380.9
(22) Date of filing: 12.09.1996
(51) Int. Cl.: G01N 21/78

(54) **METHOD AND APPARATUS FOR DETECTING ELECTROCHEMILUMINESCENCE**

(30) Priority: 12.09.1995 JP 260775/95
(71) Applicant: Eisai Co., Ltd., Tokyo 112-88 (JP)
(72) Inventor: NAMBA, Yuzaburo, Tsukuba-shi, Ibaraki 305 (JP); USAMI, Michinori, Tsukuba-shi, Ibaraki 305 (JP)
(74) Representative: von Samson-Himmelstjerna, Friedrich R., Dipl.-Phys.
(86) International application number: JP9602612
(87) International publication number: WO9710498

(57) **Abstract**

There is a method of detecting the light emission of electrochemiluminescence from an electrochemiluminescent material which is excited by the reaction of production and elimination of ions in a cell from an electric reaction with a liquid specimen which is an electrolyte composed of the electrochemiluminescent material and an electrochemiluminescence enhancer. In particular, the method comprises the step of controlling a current, which runs across the liquid specimen.

## Description

### [Technical Field]

The present invention relates to a method and an apparatus for controlling the reaction on the electrode, which stimulates the light emission of electrochemiluminescence.

### [Background of the Invention]

Electrochemiluminescence (ECL) is the emission of light generated from the reaction on the electrode by the excitation of an electrochemiluminescent material such as metal chelate by the electrode reaction. Various methods are disclosed in Japanese Patent Laid-open Publications (unexamined), JP/A/H2-501749, JP/A/S62-500663, JP/A/S64-500146, JP/A/H4-502208, and JP/A/H4-502209, and Japanese Patent Publications (examined) JP/B/H7-6913 and JP/B/H7-37464, which comprise the steps of introducing into an electrode a liquid specimen which consists of an electrolyte including an electrochemiluminescent material and possibly, an electrochemiluminescence enhancer, subjecting it to electrogenerated ECL reaction in the cell, and detecting the light emission of the electrochemiluminescent material being excited by the reaction of the production and elimination of ions from the electrogenerated reaction.

Also, techniques for detecting and measuring a small trace of proteins such as antigen or antibody are known as depicted, for example, in Reference 1, "An approach to highly sensitive immunologic measurement by electrochemiluminescence method" and "An approach to AFP measurement by electrochemiluminescence method", The Japanese journal of clinical pathology, Vol. 39, extra ver., 1991; Reference 2, "Electrogenerated chemiluminescence: an oxidative-reduction type ECL reaction sequence using tripropylamine", J. ELECTROCHEM. SOC., pp. 3127-3131, Vol. 137, No. 10, Oct. 1990; and Reference 3, "Electrochemiluminescence detection for development of immunoassays and DNA probe assays for clinical diagnostics", CLINICAL CHEMISTRY, pp. 1534-39, Vol. 37, No/9, 1991.

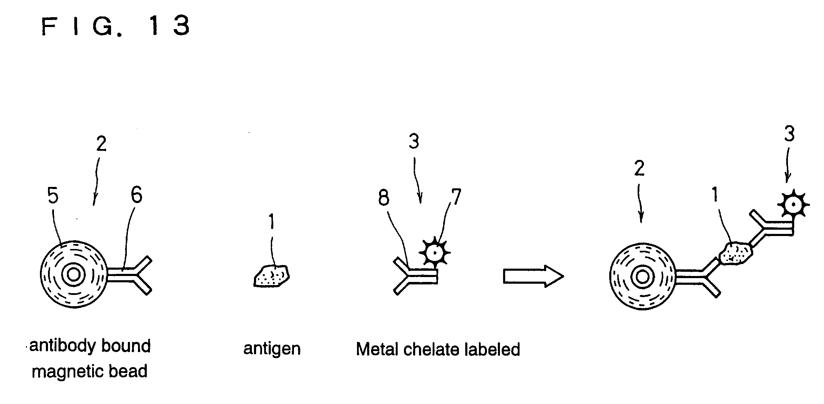

The detection of proteins such as antigen or antibody with the use of an electrochemiluminesce is explained in more detail in the following. As shown in Fig. 13, the procedure of measuring an antigen 1, e.g. virus antigen, carcinomatous antigen, and abnormal metabolic substance using antibody bound magnetic beads 2 and metal chelate labeled antibodies 3. The antibody bound magnetic bead 2 comprises a combination of a magnetic bead 5 made of latex containing ferrite and a capture antibody 6, e.g. monoclonal antibody. The labeled antibody 3 comprises a combination of an electrochemiluminescent substance 7 such as ruthenium-tris-bipyridyl (Ru(bpy)₃²⁺ ) compound expressed by Formula (1) or (2), renium (Re) complex expressed by Formula (3) where n is an integer and preferably, 2 or 3, m is whichever 1, 2, and 3 and preferably 1, W is selected from CHO, COOH, NH₂, or Br, and R is a negative ion, or osmium (Os) complex expressed by Formula (4), and an antibody 8, e.g. monoclonal antibody.

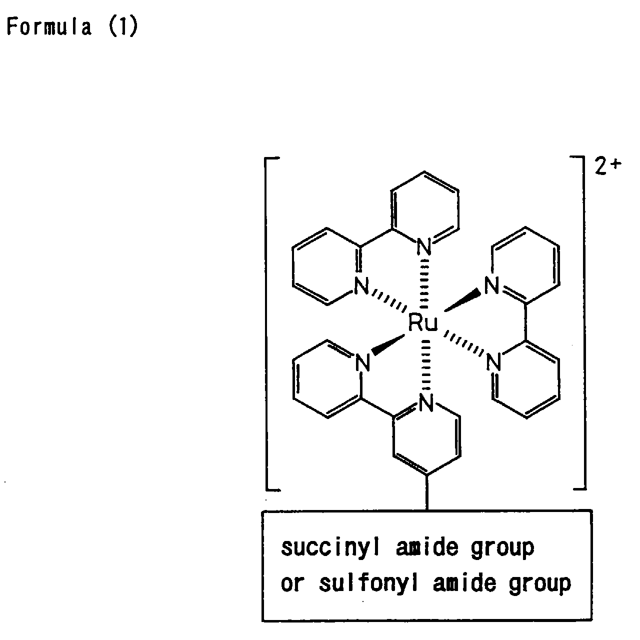

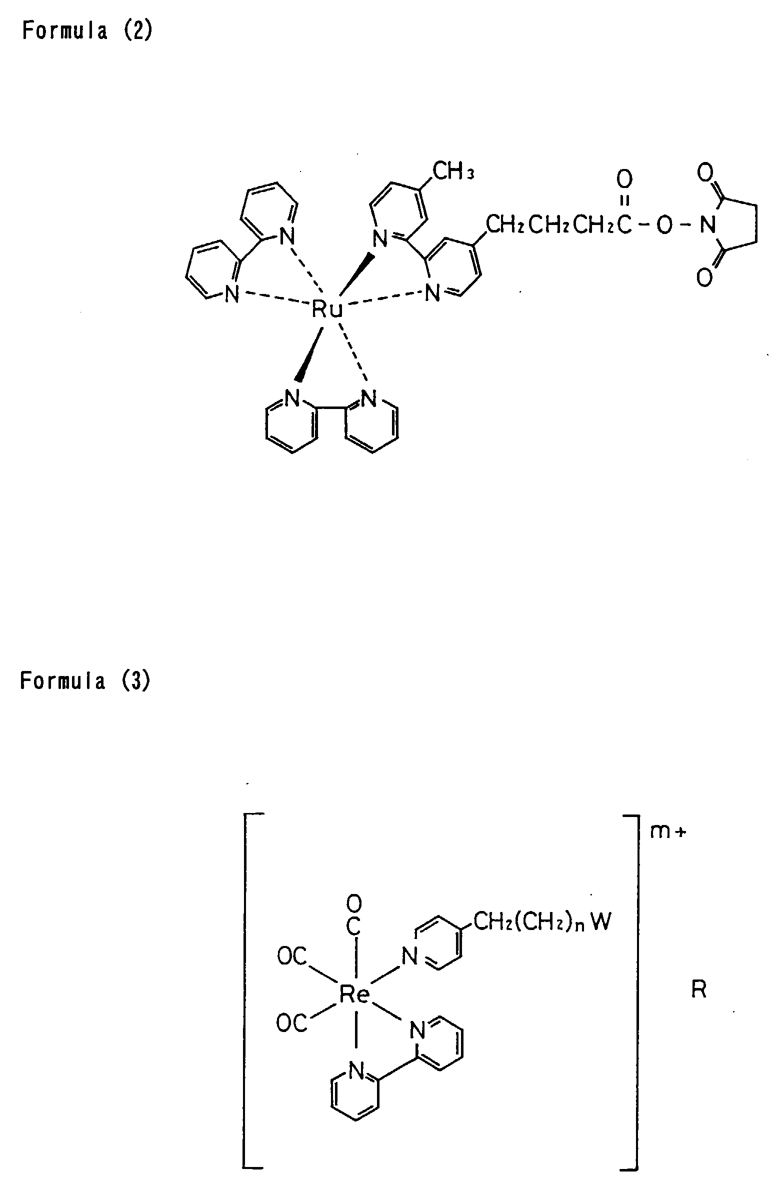

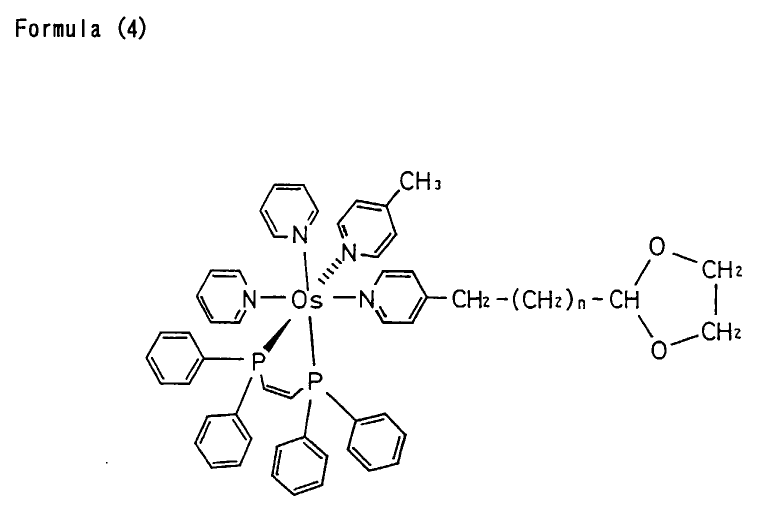

When the antigen 1 has been reacted with the antibody bound magnetic bead 2 and the labeled antibody 3 in sandwich complex form, it can easily be captured by the magnetic force and be detected and/or measured.

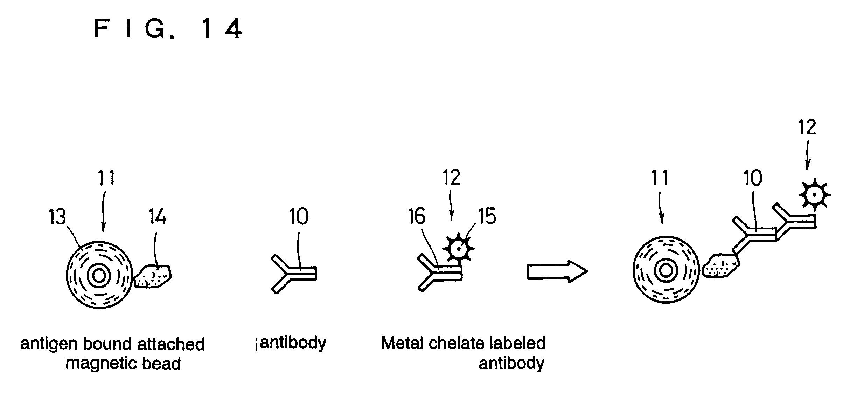

Referring to Fig. 14, the procedure of measuring an antibody 10 employs antigen bound magnetic bead 11 and labeled antibody 12. The antigen bound magnetic bead 11 comprises a combination of a magnetic bead 13 and an antigen 14. The labeled antibody 12 comprises an antibody 16 labeled with an electrochemiluminescent substance 15. When the antibody 10 has been reacted to the antigen bound magnetic bead 11 and the labeled antibody 12 in sandwich complex form, it can easily be captured by the magnetic force and be detected and/or measured.

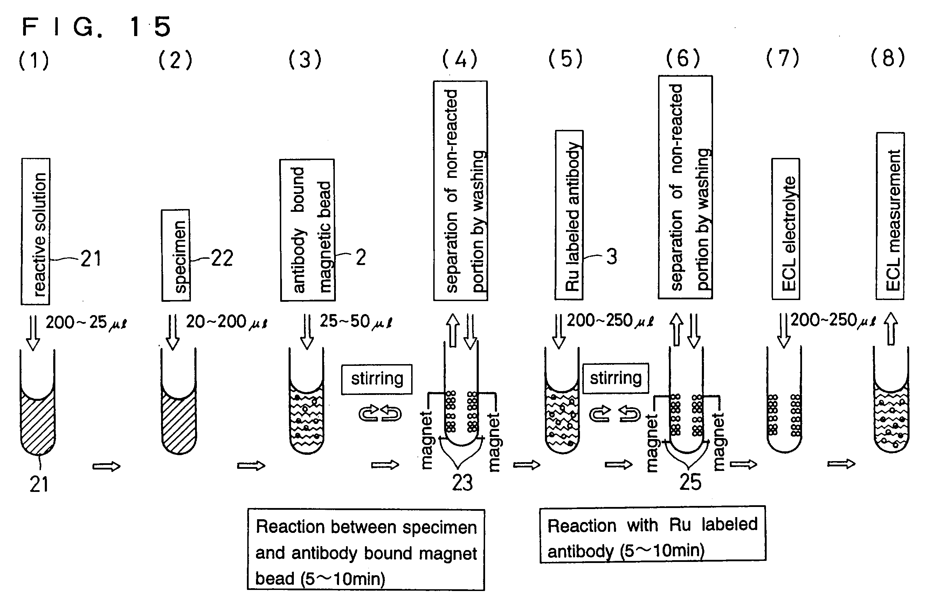

Fig. 15 illustrates a stepwise procedure for detecting the light emission of electrochemiluminescence stimulated by electrogenerated reaction over the antigen 1 sandwiched between the antibody bound magnetic bead 2 and the labeled antibody 3. The steps include:
(1) filling a vessel with the reactive solution 21;
(2) supplying a specimen 22 containing the antigen 1;
(3) supplying the antibody bound magnetic beads 2 to capture the antigen 1;
(4) stirring the mixture at a predetermined temperature (e.g. 37 degree Celsius) for a predetermined length of time (e.g. 5 to 10 minutes) in order to capture and to wash such antigen 1 captured by the antibody bound magnetic bead 2 easily captured by magnet, followed by keeping such antigen 1 captured by antibody bound magnetic bead inside of the vessel influence of the magnet situated around the vessel, then, followed by discharging thus remaining liquid portion from the vessel, followed by feeding a flow of washing solution to wash out a non-reacted portion of the specimen 22 with the buffer solution;
(5) supplying the labeled antibody 3 to the antigen 1;
(6) stirring again the mixture for binding the antigen 1 with the labeled antibody 3 to form a sandwich structure and to have been captured by magnet easily, and keeping such sandwich structure with magnetic bead inside of the vessel situated magnet(s) 25 about the vessel, then, followed by discharging thus remaining liquid containing the labeled antibody 3 with the washing solution;
(7) supplying an electrolyte for electrochemiluminescent (ECL) containing such as potassium dihydrogen phosphate (KH₂PO₄) and an ECL enhancer such as tripropylamine (TPA) to prepare a specimen liquid; and
(8) allowing an electric current leading to the electrode through the specimen liquid for generating an electrode reaction and measuring the emission of light from the ECL substance 7 being excited by the reaction of production and elimination of ions in the electrode reaction.

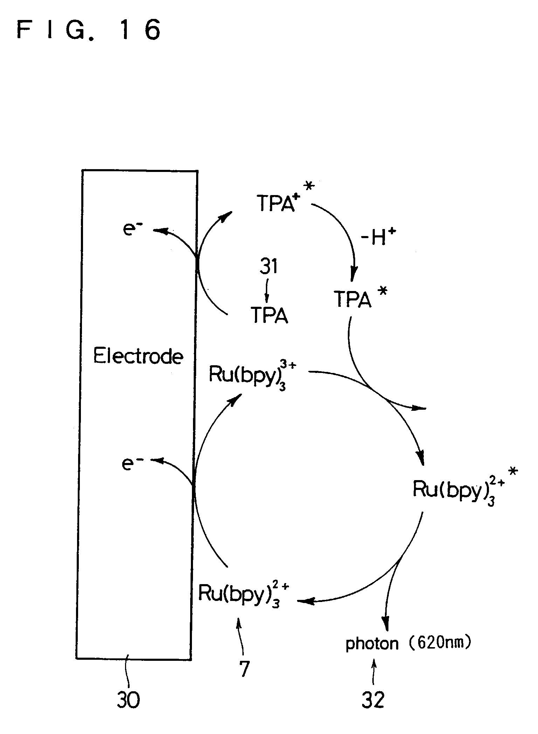

The emission of ECL light at the step (8) is then explained in more detail, referring to Fig. 16. The ECL substance 7 or Ru(bpy)₃²⁺ of the labeled antibody 3 bound to the antigen 1 is oxidized on the positive electrode 30 shifting to Ru(bpy)₃³⁺. The TPA 31 in the electrolyte is also oxidized on the anode 30 turning to positive ion radical TPA⁺*. When a proton (H⁺) is deducted, the cathion radical TPA⁺* changes to reduced radical TPA*. Ru(bpy)₃³⁺ receives the electron from the radical TPA* and shifts to its bivalent excited form of Ru(bpy)₃²⁺* which hence emits photon 32 of substantially 620 nm wavelength and returns to its ground state, Ru(bpy)₃²⁺. As the photon 32 is emitted, TPA is consumed. TPA is however highly redundant as compared with Ru(bpy)₃²⁺ and will be supplemented quickly. More specifically, Ru(bpy)₃²⁺ in the ground state is subjected to cycled reactions where the ECL substance 7 is repeatedly excited thus emitting a series of the photons 32.

The photon 32 emitted from Ru(bpy)₃²⁺ excited on the anode 30 is detected by a light detector such as a photomultiplier tube for detecting or measuring a trace concentration of the antigen 1 in the liquid specimen. The electrochemiluminesce detecting method is easier in preparation of the specimen and higher in accuracy than any chemical luminescence (CL) method and will greatly be appreciated in the field of clinical medicine or the detection of trace substance to be measured.

One of such electrochemiluminescent light detecting methods is disclosed in WO US90-01370 as shown in the form of an electrochemiluminescent light detecting apparatus 40 in Fig. 17. The apparatus 40 has a flow type cell 42 formed in a main body thereof. The cell 42 is connected with an inlet conduit 43 and an outlet conduit 45. A liquid specimen is introduced into the cell 42 by a feeding means not shown. The liquid specimen filled in the cell 42 is prepared by the step (7) and is an electrolyte solution containing the antigen 1 sandwiched between the antibody bound magnetic bead 2 and the labeled antibody 3.

The working electrode 46, which acts as the anode for generating an ECL reaction, is located in a bottom part 44 of the cell 42. Also, a counter electrode 47, which serves as a cathode for the ECL reaction, is located in a top part 48 of the cell 42. The electrode reaction occurs in the cell 42 when a voltage of a given potential is applied between the working electrode 46 and the counter electrodes 47. On the process of this electrode reaction, the ECL reaction generated on the working electrode 46.

The upper side 48 of the cell 42 comprises a light transparent material such as acrylic resin or glass. Mounted above and adjacent to the upper side 48 is a light detector such as photomultiplier tube (PMT) 50 for receiving and converting an intensity of ECL light emitted on the working electrode 46 into an electric signal.

As the third electrode, a reference electrode 51 is mounted to an intermediate region of the outlet conduit 45 for measuring a potential difference between the working electrode 46 and the liquid specimen. Most commonly, the reference electrode 51 is a silver/silver chloride electrode, which includes a silver chloride electrode 52. The silver chloride electrode 52 is connected with the outlet conduit 45 by a liquid interface 53 (a porous membrane), a solt bridge 55 (a KCl solution), a liquid interface 56 (a capillary tube), and an electrolyte 57 (a KCl solution) is connecting to the liquid specimen.

When the cell 42 of the electrochemiluminescent light detecting apparatus 40 is filled with the liquid specimen from the inlet conduit 43 and a voltage of a given potential is applied between the working electrode 46 and the counter electrode 47 of the cell 42, the electrode reaction in the cell 42 starts and stimulates light emission of ECL on the working electrode 46. The ECL light transmits through the top part 48 of the cell 42 and enters into the photomultiplier tube 50 where it is converted to an electric signal. It is known that the intensity of ECL light produced by the ECL reaction is proportional to the amount of the antigen 1 in the liquid specimen. By measuring the ECL light from the electrode reaction of the specimen liquid, the amount of the antigen 1 in the liquid is obtained.

### [Detailed Description of the Invention]

It is essential for measuring a correct value by the ECL light emission phenomenon in the unknown specimen to compare the each measurement resultants obtained under the constant conditions of the ECL reaction. Hence, the electrode reaction in the liquid specimen has to be controlled by keeping a favorable electrolysis process having good reproducibility between the working electrode 46 and the counter electrode 47.

The electrode reaction occurs at an interface between the electrode and the liquid specimen. In the prior patents disclosed in JP/A/H2-501749 and JP/B/H7-6913, a potential difference between the operating electrode 46 and the reference electrode 51 is detected and then control led the potential across the interface between the working electrode and the liquid specimen, which will contribute to the enhancement of the electrode reaction more or less.

The method using the reference electrode for controlling the electrode reaction is however deviated from the principles of any common electrochemical analysis. More particularly, the common electrochemical analysis is based on the examination of the quantity and quality of electrode reaction- dependent chemical species from potentials and currents across the electrodes and their shift during ECL reaction. (It is noted that there have been proposed some other ECL detecting methods such as by K. Yamasita et al for detecting an ECL light from a specimen being directly excited by electrochemical reaction, J. ANAL. CHEM., Vol. 63, No. 9, pp. 872-876, 1991, and by Egashira N. et al for measuring a dose of peroxy sulfate or oxalic acid in an electrolyte solution with the use of non-labeled, free Ru complex.) For detecting an object, the prior patents of ECL detecting method of JP/A/H2-501749 and JP/B/H7-6913 employs a large amount of ECL enhancer (TPA) as compared with an amount of the Ru labeled object. The concentration of TPA is as high as 10⁻¹ M while the labeled Ru compound of the object is 10⁻⁸ to 10⁻¹² at best. Thus, in the total electrode reaction, the majority of the oxidative reaction works to the TPA, and hence that for the oxidation for the Ru compound from bivalent to trivalent form is minor part, although itself is essentially important. Additionally explaining the total energy of electricity consumed for electrolysis of the Ru compound is underestimated as compared with a more than 10 million times greater amount of that for the oxidation of TPA. It is thus needed in the prior patent method of JP/A/H2-501749 and JP/B/H7-6913 to use an improved technique, not common for the conventional electrochemical analysis, for performing uniform and efficient oxidation of a great amount of TPA contained in the electrolyte. Unfortunately, the electric current depend on the cell condition under the potential controlled method primarily, it is hardly to control the good reproducibility of the electric current during the measurement procedure. Also, when the current requirement for stimulating ECL reactions is much more abundant than conventional electrochemistry, an electric resistance component of the liquid causes a voltage drop hence producing a gradient of the potential in the liquid. Except case of current is absent or present but a negligible rate for the potential gradient, the prior potential controlling method for requires a considerable level of skill and fine adjustment for setting the potential through the cycles of the electrolysis process to have a favorable reproducibility of the measurements while concerning the positional arrangement and the structure of the working electrode 46 and the counter electrode 47 and a profile of the potential variation subjected to the operating condition and the state of local regions of the electrodes.

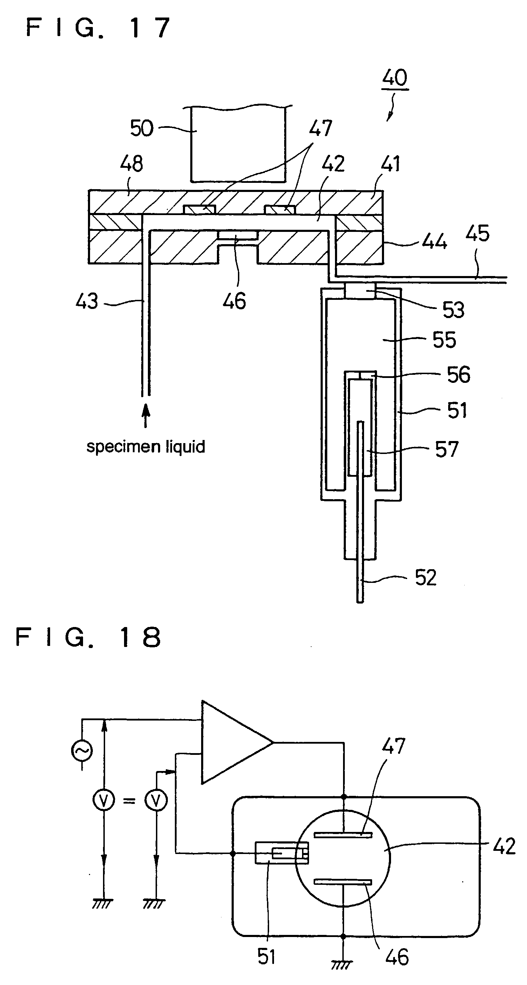

In addition, the prior method depicted in patent JP/A/H2-501749 or H7-6913 has another drawback that the reference electrode 51 and more specifically, the electrolyte 57 in the reference electrode 51 is likely declined in quantity. As shown in Fig. 17, the electrolyte 57 in the reference electrode 57 is connected to the chloride bridge 55 with the liquid specimen in the cell 42 and tends to leak out from the reference electrode 57 to the liquid flow system. This leakage may be attenuated by addition of gelatine to the salt bridge 55 but never prevented perfectly.

Although the reference electrode 51 is provided for detecting a potential but should not load the current, it is difficult to protect the current leak from silver chloride electrode 52 in a small amount of current by any possible cause. As the silver chloride electrode 52 is in service for a long period of time, its silver chloride surface coating may be loosed and failing to diginal develop potential. It is thus necessary for maintaining the quality of the silver chloride electrode 52 to give a series of maintenance service including changing of the electrolyte liquid 55, placement of a patch of silver chloride on the silver chloride electrode 52, and replacement of the electrode 51.

It is hence an object of the present invention to provide a method and an apparatus for detecting the electrochemiluminescent light at a higher level of reproducibility with no use of a reference electrode.

### [Disclosure of Invention]

For achievement of the foregoing object of the present invention, a method of detecting the electrochemiluminescent light from an electrochemiluminescent material which is excited by the reaction of the production and elimination of ions in a cell from an electrode reaction of a liquid specimen which is an electrolyte composed of the electrochemiluminescent material and an electrochemiluminescent enhancer, is provided comprising the step of controlling a current which leads on the electrode through the liquid specimen.

An electrochemiluminescent light detecting apparatus for implementing the above method of the present invention is also consisted of electrodes mounted in a cell into which a liquid specimen of an electrolyte composed of an electrochemiluminescent material and an electrochemiluminescence enhancer and a light detector for detecting the emission of electrochemiluminescent light from the electrochemiluminescent material which is excited by the reaction of the production and elimination of ions from an electrode reaction in the cell. In particular, the apparatus comprises a controlling means for controlling a current which lead on the electrode through the liquid specimen.

The electrochemiluminescent material may be a ruthenium-tris-bipyridyl (Ru(bpy)₃²⁺) expressed by formula (1) or (2), a renium (Re) complex expressed by formula (3), where n is an integer and preferably, 2 or 3, m is whichever 1, 2, and 3 and preferably 1, W is selected from CHO, COOH, NH₂, and Br, and R is a negative ion, an osmium (Os) complex expressed by formula (4), or their combination.

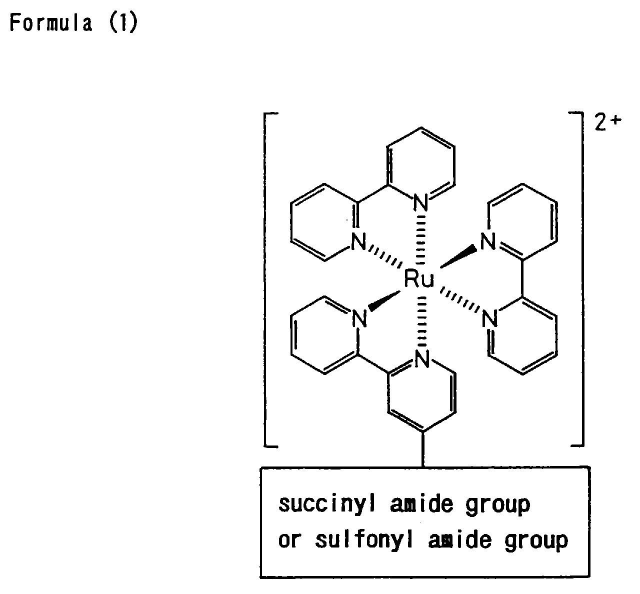

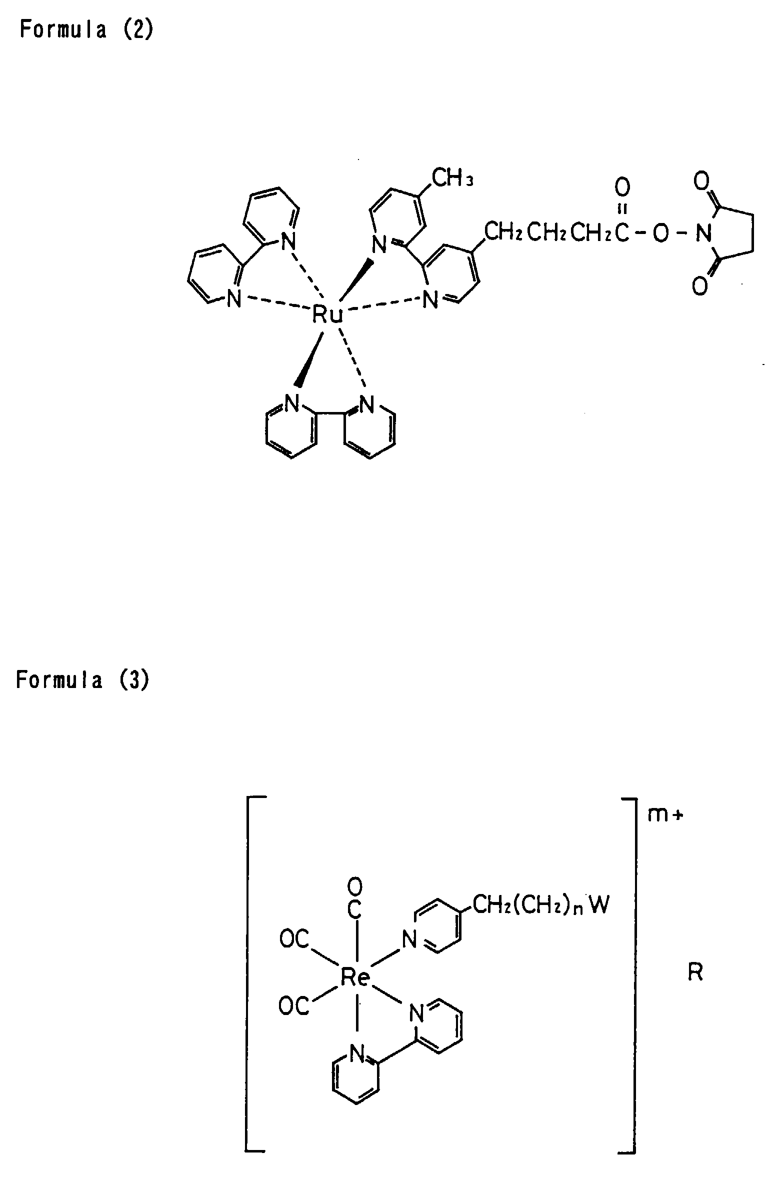

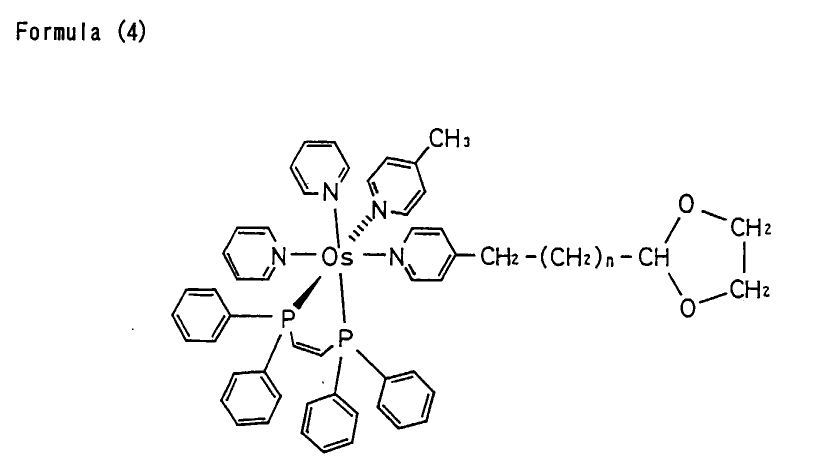

Preferably, the electrochemiluminescent enhancer may be tripropylamine (TPA) or triethylamine (TEA).

Also, the light detector may be a photomultiplier or a photodiode.

Accordingly, the present invention eliminates the use of a reference electrode required for controlling the electrode reaction to stimulate the emission of ECL light and allows the decrease of the light emission of blank for easy analysis.

### [Brief Description of Drawings]

Fig. 1 is an explanatory view of an electrochemiluminescent light detecting apparatus according to the present invention;
Fig. 2 is an exploded view of a main body of the apparatus shown in Fig. 1;
Fig. 3 is a cross sectional view of a bottom part of the main body;
Fig. 4 is a cross sectional view of a top part of the main body;
Fig. 5 is a diagram of a measurement circuit with a current being controlled;
Fig. 6 is a graph showing a time-dependent change of the intensity of ECL light in Experiment 1 under control of the electrode potential;
Fig. 7 is an enlarged graph of the intensity of blank light emission from an electrolyte liquid in low-level sections of Fig. 6;
Fig. 8 is a graph showing a time-dependent change of the intensity of ECL light in Experiment 1 under control of the current;
Fig. 9 is an enlarged graph of the intensity of blank light emission from the electrolyte liquid in low-level sections of Fig. 8;
Fig. 10 is a graph showing a change of the current with time in Experiment 1 under controlling the current;
Fig. 11 is a graph showing a change of the potential with time in Experiment 1 under controlling the potential;
Fig. 12 is a graph showing the relation between controlled voltage and current measurement in Experiment 1 under controlling the potential;
Fig. 13 is an explanatory schema showing the principles of a method for measuring an antigen by the ECL;
Fig. 14 is an explanatory schema showing the principles of a method for measuring an antibody by the ECL;
Fig. 15 is an explanatory schema showing each reaction steps by the ECL method;
Fig. 16 is a schema explaining the emission mechanisms of ECL light in theory;
Fig. 17 is a schematic view of a conventional electrochemiluminescent light generating and detecting apparatus; and
Fig. 18 is a diagram of a control circuit using a reference electrode.

### [Best Mode for Carrying out the Invention]

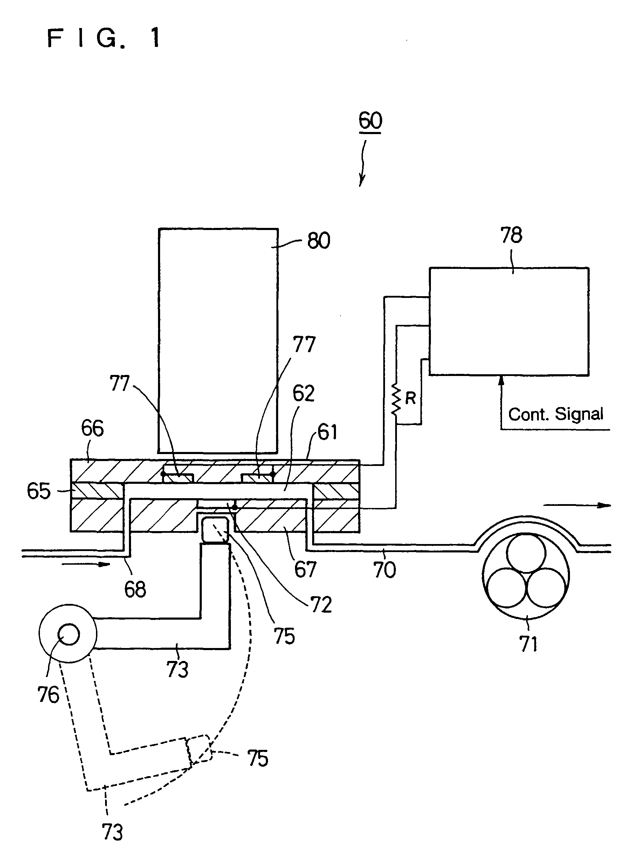

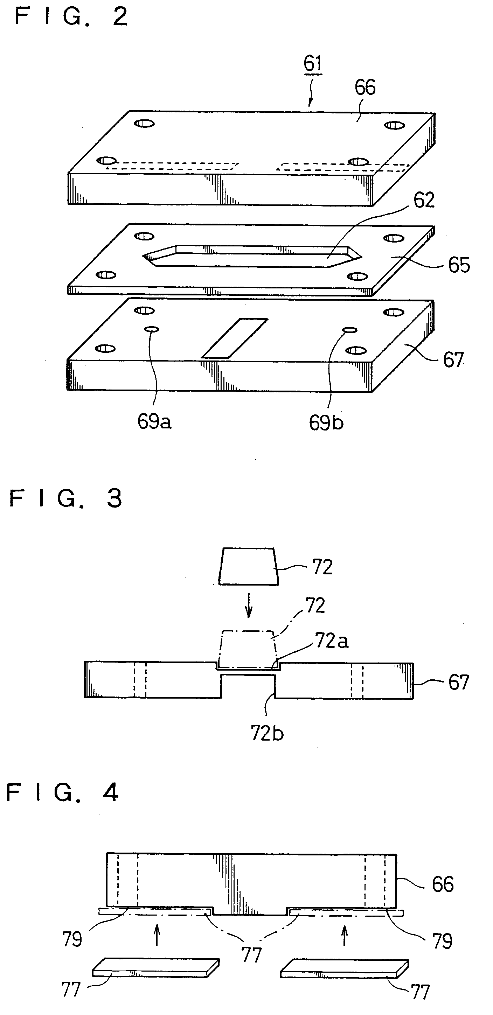

Fig. 1 illustrates an electrochemiluminescent light detecting apparatus 60 for carrying out the method of the present invention. The apparatus 60 has a cell 62 provided in a main body 61 thereof. Fig. 2 is an exploded view of the main body 61 which comprises a spacer 65 defining at the center the internal space or cell 62 formed of a leaf-shape in vertical view, a top part 66 mounted directly on the upper side of the spacer 65 closing the top of the cell 62, and a bottom part 67 mounted directly on the lower side of the spacer 65 closing the bottom of the cell 62. The bottom part 67 has a pair of holes 69a and 69b provided therein for inlet and outlet liquid specimen through the cell 62. The cell 62 is hence defined by a layer assembly of the spacer 65, the top part 66, and the bottom part 67.

The cell 62 is connected to the holes 69a and 69b in the bottom part 67 with an inlet conduit 68 and an outlet conduit 70, which is equipped with a pump 71. The pump 71 may be a peristaric pump for introducing the liquid specimen from the inlet conduit 68 into the cell 62 and out it from the cell 62 to the outlet conduit 70. The liquid specimen filled in the cell 62 is prepared by the step (7) shown in Fig. 15, which incorporates an electrolyte containing the antigen 1 sandwiched between the antibody bound magnetic bead 2 and the labeled antibody 3.

A working electrode 72 of a square shape, which acts as an anode, is mounted in the bottom part 67. As shown in Fig. 3, the working electrode 72 is fixedly seated in a recess 72a provided in the center of the upper side of the bottom member 67. The working electrode 72 may be made of a conductive material such as carbon or a metal, e. g. gold, platinum, and nickel. Another recess 72b is formed in the lower side of the bottom part 67 beneath the working electrode 72 for accepting a magnet 75, which is mounted to the end of a movable arm 73. The arm 73 is pivoted about an axis 76. When the arm 73 is turned upward, the magnet 75 moves into the recess 72b of the bottom part 67 beneath the working electrode 72. Lowering of the arm 73 causes the magnet 75 to retract from the recess 72b beneath the working electrode 72.

A pair of counter electrodes 77 are mounted to the top part 66 of the cell 62 to locate at the upper left and right sides of the working electrode 72 respectively. As best shown in Fig. 4, the two counter electrodes 77 are securely fitted in a couple of recesses 79 respectively provided in the lower side of the top part 66. The counter electrodes 77 may be made of the same conductive material as of the working electrode 72. When a electric potential is applied by a power supply 78 between the working electrode 72 and the two counter electrodes 77, the liquid specimen in the cell 62 is loaded with a current and thus subjected to an electrogenerated reaction on the electrode. The electrogenerated reaction triggers an ECL reaction on the working electrode 72. The current loading on the electrode through the liquid specimen in the cell 62 is measured while passing through a resistor R before entering the power supply 73. A control signal for controlling the current loads on the electrode through the liquid specimen in the cell 62 is applied to the power supply 78.

The top part 66 of the cell 62 has a center region thereof made of a light transparent material such as acrylic resin or glass. ECL light generated on the working electrode 72 is passed upwardly between the two counter electrodes 77 and through the center region of the top part 66 of the cell 62. The ECL light from the ECL reaction on the working electrode 77 through the center region of the top part 66 between the two counter electrodes 77 is received by an optical detector such as a photomultiplier (PMT) 80 located above and adjacent to the top member 66 of the cell 62. The spacer 65 and the bottom part 67 of the cell 62 may also be made of acrylic resin or glass or of a proper dirt-proof material such as Teflon since their light transparentability is unnecessary.

In addition, the main body 61 is entirely enclosed in a light shielding means such as a black box as not shown. This allows the photomultiplier 80 to receive no light but the ECL light generated in the cell 62.

Before starting the measurement of ECL light in the ECL detecting apparatus 60 of the embodiment, the cell 62 is cleaned with a cleaning (alkali) solution. The introduction of the cleaning solution from its container joined to the inlet conduit 68 into the cell 62. As the cleaning solution runs through the cell 62, it cleans the exposed surfaces of the working electrode 72 and the two counter electrodes 77 mounted to the bottom 67 and the top part 66 of the cell 62 for ensuring a favorable level of the electrode reaction.

After the cleaning, the cell 62 is filled with an electrolyte and the arm 73 is pivoted upwardly allowing the magnet 75 to fit into the recess 72b beneath the working electrode 72. A predetermined dose of the liquid specimen is then introduced together with the electrolyte into the cell 62 by the action of the pump 71.

The pump 71 forces the liquid specimen with the electrolyte to run from the inlet conduit 68 into the cell 62 and out from the outlet conduit 70. While the liquid specimen with the electrolyte continuously flows across the cell 62, the antibody bound magnetic beads 2 reacted to the antigen 1 are attracted and held above the working electrode 72 by the magnetic force of the magnet 75. When the predetermined dose of the liquid specimen has been introduced into the cell 62, the pump 71 is turned off to stop the feeding of the electrolyte solution. This is followed by the lowering of the arm 73 to retract the magnet 75 from beneath the working electrode 72.

As the cell 62 is filled with the liquid specimen with the electrolyte solution, the magnetic bead 2 reacted with the antigen 1 in the liquid specimen remains held on the working electrode 72.

Then, a voltage is applied by the power supply 78 between the working electrode 72 and the counter electrodes 77, through which the liquid specimen in the cell 62 is charged with an electric current predetermined by the control signal, followed the reaction at the working electrode is started. The current value of the liquid specimen in the cell 62, electric resistant R, and such measured current value are set to the power supply 78.

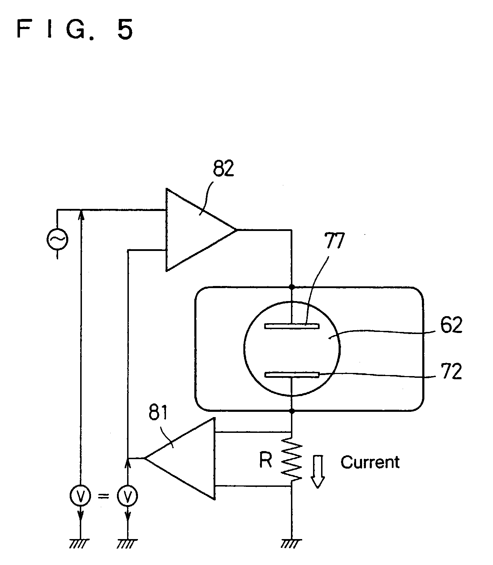

The current loading on the electrode through the liquid specimen in the cell 62 is monitored and control led by a circuit shown in Fig. 5. The current in the cell 62 ls converted to the voltage by the resistor R and an amplifier 81, and the voltage signal supplies to the inverted input of an error amplifier 82 where it is compared with the control signal to minimize the error between the detected and control voltage and then supplied of a desired value of the current to the electrode through the liquid specimen. For example, assuming that the resistance of the resistor R is 10 ohm, the amplification of the amplifier 81 is ten times, and the current to be control led is 1 mA, the control signal is preferably 100 mV. It is also possible to have -1 mA of the current to the electrode through the liquid specimen when the control signal is -100 mV.

The introduction of the desired value of the current to the electrode through the liquid specimen optimizes the electrode reaction in the cell 62 which is prescribed with Fig. 16, causing the emission of ECL light from the working electrode 72. The ECL light is passed through the top part 66 of the cell 62 and received by the photomultiplier 80 where it is converted to an electric signal for measurement. The detection and quantitative determination of the antigen 1 contained in the specimen is conducted by measuring the ECL light intensity emitted by the ECL reaction in the specimen liquid. After the measurement of the ECL light is completed, the pump 71 is turned on again to feed another flow of the cleaning liquid for cleaning in the cell 62.

### [Experimental Example]

In experiments, an antigen detection was carried out by the electrochemiluminescence process using the two methods and the results were compared between the current controlled detecting method which is the present invention and a conventional reference electrode dependent detecting method where a potential between the reference electrode and the working electrode was used for controlling the ECL process.

### [Arrangement of Test Apparatus]

The working electrode 72 installed in the bottom part 67 of the cell 62 shown in Fig. 2 is selected from platinum strips of 6x6 mm size and 6x8 mm size. The counter electrodes 77 in the top part 66 of the cell 62 are two platinum strips of 6 x 3 mm size located at the upper left and right sides of the working electrode 72 respectively. The top part 66 is an acrylic resin block and the spacer 65 is a 0. 5-mm thick plate of Teflon. The magnet 75 for holding the antigen 1 reacted by the antibody bound magnetic bead on the working electrode 72 is a single-pole magnet of 5 mm in diameter and 4 mm in thickness. The inlet conduit 68 is a Teflon tube of 1.0 mm in inner diameter for conveying 0.01 to 5 milliliters of liquid. The photomultiplier 80 is a "Luminometer" using R-1104 model (a product of Hamahoto, which has a higher level of gain, and is particularly sensitive to red light, and its PMT voltage can be changed from 500 volts to 1,100 volts). The reference electrode of a conventional apparatus employed for the test is made of silver and silver chloride. The currents in the cell and the electric potential are monitored and controlled to desired values by means of a microprocessor.

### [Specimen to be detected]

ECL material: Ru(bpy)₃²⁺ expressed by the following formula (1). 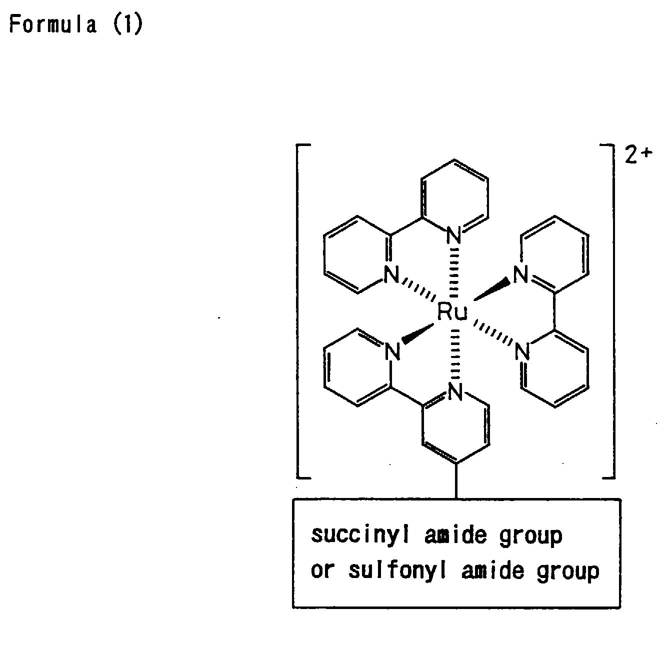
Electrolyte: a solution containing 112 mM of KH₂PO₄, 88 mM of K₂HPO₄·3H₂O, 50 micro M of NaCl, 6.5 mM of NaN₃, 0.8 micro M of Triton X-100, 0.4 mM of Toween 20, and 100 mM of tripropylamine.
Cleaning (alkali) liquid: a solution containing 0.5 M of KOH and 1.25 % of Triton X-100.
Ru(bpy)₃²⁺-NHS: ruthenium (2, 2'-bipyridyl)2(4-[3-(1,3-dioxolane-2-il)propyl]-4'-methyl-2,2-bipyridine)²⁺.
Dynal particles: magnetic beads of 4.5 micrometers in diameter supplied from Nippon Dynal.

### [Measurement of ECL with current control]

The current controlled ECL detecting method comprises three major steps; (1) preparation prior to measurement, (2) measurement, and (3) cleaning. The preparation step includes shifting the current from 0.0 mA to +8.0 mA and -5.0 mA to +0.1 mA in a square waveform. The measurement step includes shifting the current at a rate of 10 mA/sec from +0.1 mA to +8 mA and +0.2 mA in a triangle waveform. The cleaning step includes shifting the current from +0.0 mA to +8.0 mA and from -5.0 mA to 0.0 mA in a square waveform. The above values of the current are assigned to the working electrode of 6 x 5mm size. The current assigned to 6 x 8 mm size of the working electrode is 1. 6 times greater than the above values.

### [Measurement of ECL with electric potential control]

Similarly, the electric potential controlled ECL detecting method comprises three major steps; (1) preparation prior to measurement, (2) measurement, and (3) cleaning. The preparation step includes shifting the voltage at a rate of 2.0 V/sec from 0.0 V to +2.2 V and -1.0 V to +6.0 V in a triangle waveform. The measurement step includes shifting the voltage at the rate of 1.0 V/sec from +0.6 V to +2.8 V and +2.0 V in a triangle waveform. The cleaning step includes shifting the voltage from +0.0 V to +3.0 V and from -0.5 V to 0.0 V in a square waveform. The above values of the voltage are assigned between the working electrode and the reference electrode made of silver and silver chloride.

### [Experiment 1]

The emission of ECL light from the metal chelate labeled magnetic particles (sensitized magnetic particles or model particles bound with the metal chelate labeled antibody) was measured and compared between the current controlled ECL detecting method and the potential controlled ECL detecting method.

The sensitized magnetic particles were prepared as bellow. 30 mg (1 ml) of M-450 Dynal uncoated beads (supplied from Nippon Dynal) was rinsed with 2 ml of 150-mM phosphate buffer (pH 7. 5) and then separated by a magnet. A solution containing 150 micro gram of mouse IgG (produced by ourselves) labeled with Ru(bpy)₃²⁺, 1 ml of 0.05% thimerosal and phosphate buffered saline (PBS) was added to the beads and mixed at the room temperature for an overnight. The magnetic beads were then separated by means of magnetic force from the solution which was discarded. Furthermore, in order to block active regions of the surface of the beads, 1ml of PBS solution including 3 % BSA (bovine serum albumin), 0.05 % sodium azide was applied and reacted for two hours at the room temperature. The sensitized magnetic particles were rinsed five times with 2 ml of the phosphate buffer and finally, suspended in 1,000 ml of the buffer solution for storage.

The measurement of emission of ECL light was carried out by supplying 200 micro liters of the sensitized magnetic particles solution into the cell by the action of the pump, lifting up the magnet close to the working electrode for catching the magnetic particles on the working electrode, retracting the magnet from the cell, after the cell being filled with the magnetic particles, and applying a potential to the electrodes desired in the measuring stage, and measuring the intensity of the ECL light using the photomultiplier.

Then, both the current control led method and the potential controlled method were adjusted so that the intensity of ECL emission counts from the sensitized particles (bound to the metal chelate antibody) was substantially identical to each other. Table 1 shows the results of accumulated values of the intensity of ECL emission of 41 sections which were collected from all data period that divided by 10 milli-second, 20 sections at each side from the center of time when the ECL emission is peaked.

**Table 1**

| | Potential controlled | | Current | controlled |
|---|---|---|---|---|
| Sensitized particles | 61331 | 62032 | 61474 | 60508 |
| | 62504 | 62689 | 60811 | 60658 |
| | 61451 | 61095 | 60732 | 60937 |
| | Average=61850 | | Average=60853 | |
| | CV=1.06% | | CV=0.55% | |
| Blank in specimen liquid | 277 | 283 | 45 | 51 |
| | 285 | 273 | 48 | 44 |
| | 281 | 286 | 52 | 42 |
| | Average=280.8 | | Average=46.7 | |
| S/N | 220 | | 1302 | |

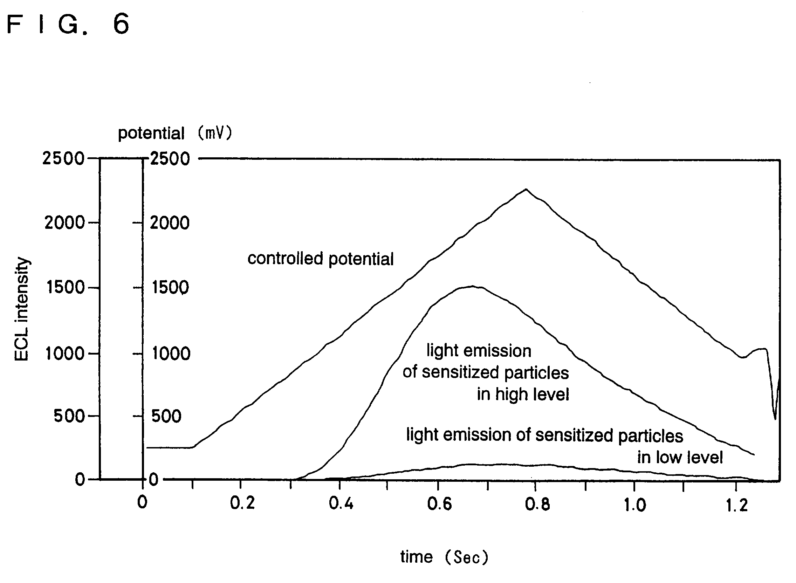

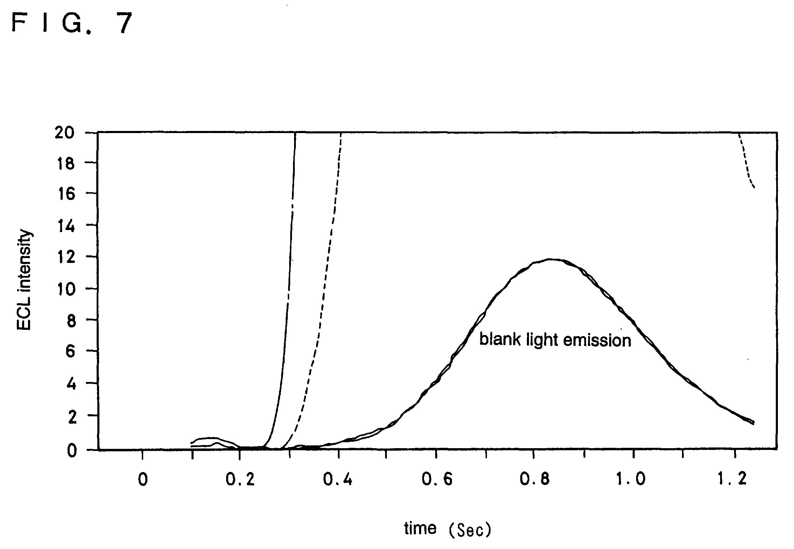

Patterns of the ECL intensity measured from the emission of ECL light are shown in Figs. 6 to 9. Fig. 6 illustrates the relation between the potential difference values and the pattern of ECL emission controlled by the potential controlled method with time. Fig. 7 is showing an enlargement of the blank light emission of ECL in low level. As apparent, the blank light emission substantially corresponds to the curve of the electric potential value in the potential controlled detecting method.

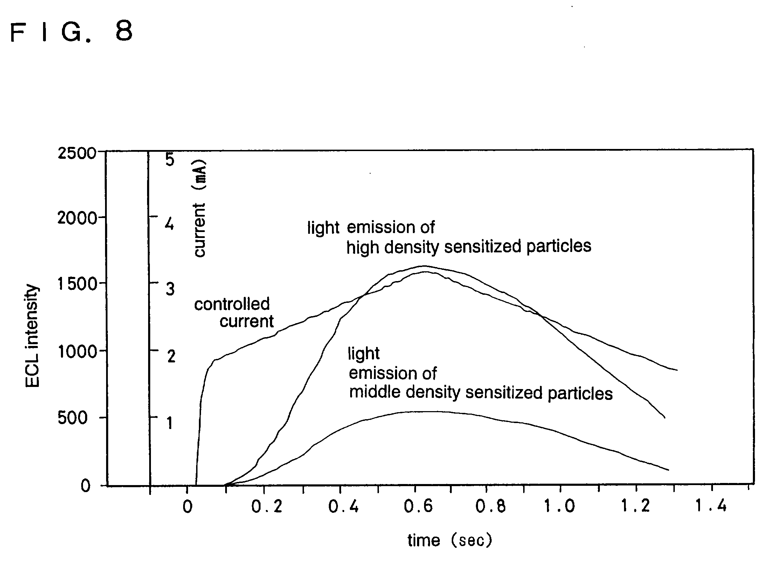

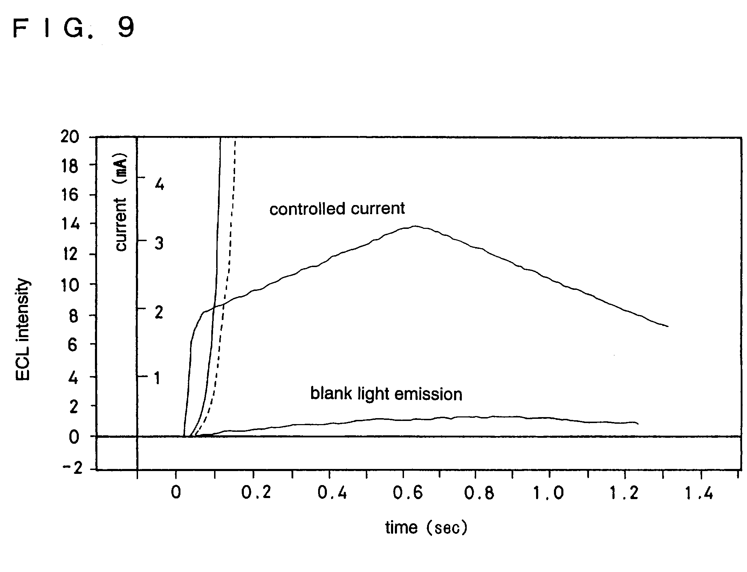

Fig. 8 illustrates the relation between the controlled current values and the pattern of ECL emission measured by the current controlled method. Fig. 9 is similar to Fig. 7, showing an enlargement of the blank light emission of ECL in low level. As apparent, the emission of ECL light in the current controlled method is as same as of that in the potential controlled method. However, the blank light emission of ECL in the current controlled method is very low as shown in Fig. 9 where no particular single peak of the ECL light emission appears as compared with the potential controlled method.

The reproducibility (in CV value) of the ECL light emission from the sensitized particles is 0.55 % in the current controlled method which is almost twice smaller than 1.06 % of the potential controlled method. Also, the blank light emission in the liquid specimen is significantly lower in the current controlled method than in the potential controlled method; the signal to noise (S/N) ratio in the current controlled method is 1302 and about six times higher than 220 of the potential controlled method.

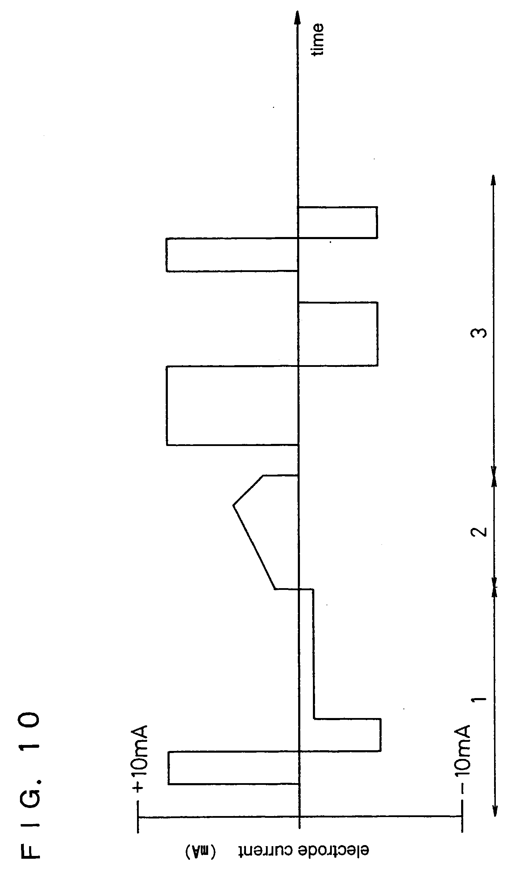

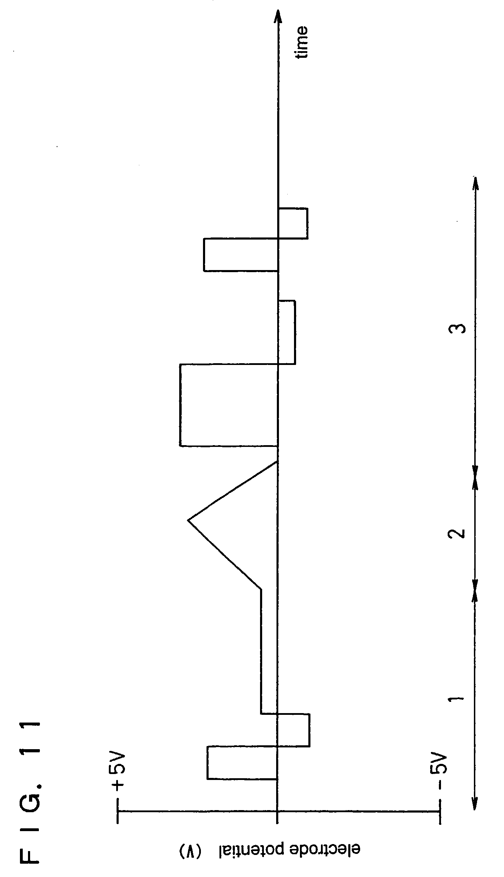

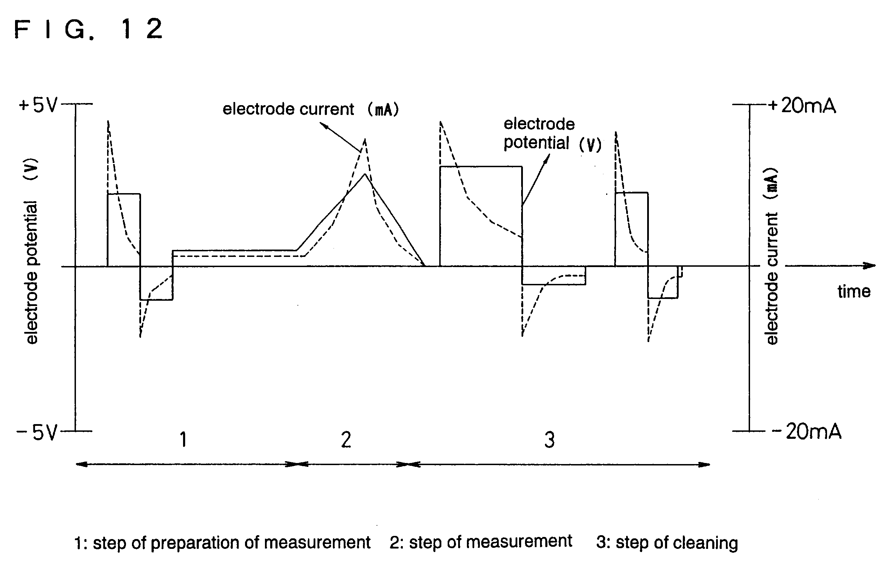

Fig. 10 shows a pattern profile of the controlled current with time and Fig. 11 is a pattern of the controlled potential difference with time. Fig. 12 illustrates the relation between the controlling voltage in the potential controlled method and its resultant measurement of current. It should be noted that Step 1 is the step of preparation for the measurement, Step 2 is the step of measurement, and Step 3 is the step of cleaning the electrodes throughout Figs. 10 to 12. As apparent from Fig. 10, the peak of the current in the current controlled method is 8 mA at best while, however, as shown in Fig. 12, it is transiently increased to as an over twice greater value as 17 mA in the potential controlled method. Such a transient current attributed to the potential controlled method appears when the electrical condition on the electrodes is not strictly controlled. Since the transient current is repeatedly developed in electrode driving cycles including preparation, measurement and cleaning and particularly at the edge of the electrodes, it may injure and decline the quality and life of the electrodes.

### [Experiment 2]

The electrochemical characteristics were compared between the current controlled method and the potential controlled method with the distance between the two counter electrodes varied. As the distance was changed from 6 mm to 8 mm and 10 mm, the electric potential difference and the current were measured when the ECL light emission was peaked. A dose of sensitized particles were identical to those of Experiment 1. The potential difference at the peak of the ECL light emission was measured in the potential controlled method and the current at the peak of the ECL light emission was measured in the current controlled method. Their measurements are shown in Table 2.

**Table 2**

| Electrode distance | Potential controlled method | Current controlled method |
|---|---|---|
| 6 mm | 1.8 V | 3.5 mA |
| 8 mm | 2.1 V | 3.5 mA |
| 10 mm | 2.6 V | 3.5 mA |

As apparent, the electric potential changes according to the electrode distance in the potential controlled method while the current remains unchanged in the current controlled method.

### [Experiment 3]

The electrochemical characteristics were compared between the current controlled method and the potential controlled method by changing area of the working electrode. The working electrode, which sized 6 mm and 8 mm in width, and the counter electrodes, which placed 10mm distance between two electrodes, were used. As a dose of sensitized particles which were identical to those of Experiment 1 had been fed, the driving condition for the electrode giving a peak of the ECL emission was measured and compared between the current controlled method and the potential controlled method. As apparent from Table 3, the driving condition is varied in response to the area of the working electrode in both methods. However, the current in the current controlled method appears in proportion to the area size of the working electrode.

**Table 3**

| Electrode area size | Potential controlled method | Current controlled method |
|---|---|---|
| 6 x 6 mm | 2.6 V | 3.5 mA (0.097) |
| 6 x 8 mm | 2.4 V | 4.7 mA (0.098) |

| | | |
|---|---|---|
| ∗ The values in the parenthesis represent currents mA per area size mm². | | |

### [Industrial Applicability]

As set forth above, the present invention eliminates the use of a reference electrode, which was essential for optimizing the electrode reaction. The present invention enables to produce a higher level of the ECL reaction with the less blank emission. Also, its method is able to avoid the transient current attributed to a conventional potential controlled method and will be attenuated hence injuring minimum wear of the electrode surfaces. Furthermore, its apparatus does not require the change of the reference electrode thus decreasing the maintenance work.

### EXPLANATION OF REFERENCE NUMBER

- 60 :: electrochemiluminescent light detecting apparatus
- 61 :: main body
- 62 :: cell
- 65 :: spacer
- 66 :: top part
- 67 :: bottom part
- 68 :: inlet conduit
- 70 :: outlet conduit
- 71 :: pump
- 72 :: working electrode
- 72a:: recess
- 72b:: recess
- 73 :: arm
- 75 :: magnet
- 76 :: axis
- 77 :: counter electrodes
- 78 :: power supply
- 79 :: recess
- 80 :: photomultiplier

## Claims

1. A method of detecting the light emission of electrochemiluminescence from an electrochemiluminescent material which is excited by the reaction of production and elimination of ions in a cell from an electrode reaction to a liquid specimen which is an electrolyte composed of the electrochemiluminescent material and an electrochemiluminescence enhancer, comprising:
controlling a current, which leads on the electrode through the liquid specimen.

2. A method of detecting the light emission of electrochemiluminescence according to claim 1, wherein the electrochemiluminescent material is a ruthenium-tris-bipyridyl (Ru(bpy)₃²⁺ ) expressed by formula (1) or (2), a renium (Re) complex expressed by formula (3), where n is an integer and preferably, 2 or 3, m is whichever 1, 2, and 3 and preferably 1, W is selected from CHO, COOH, NH₂, and Br, and R is a negative ion, an osmium (Os) complex expressed by formula (4), or their combination:

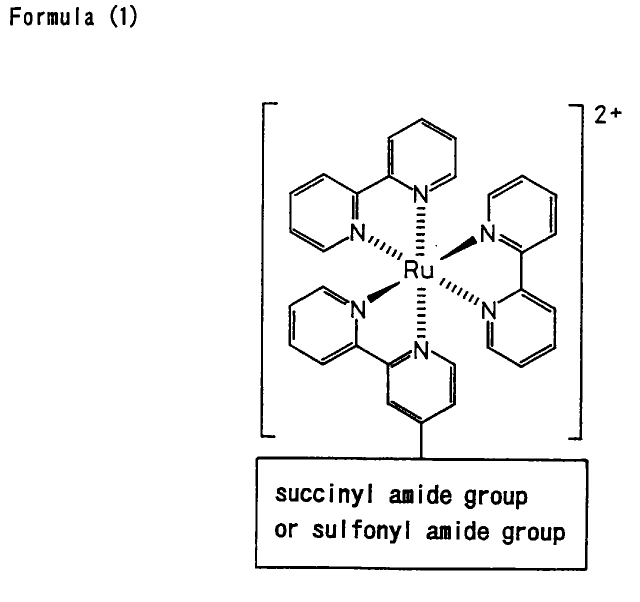

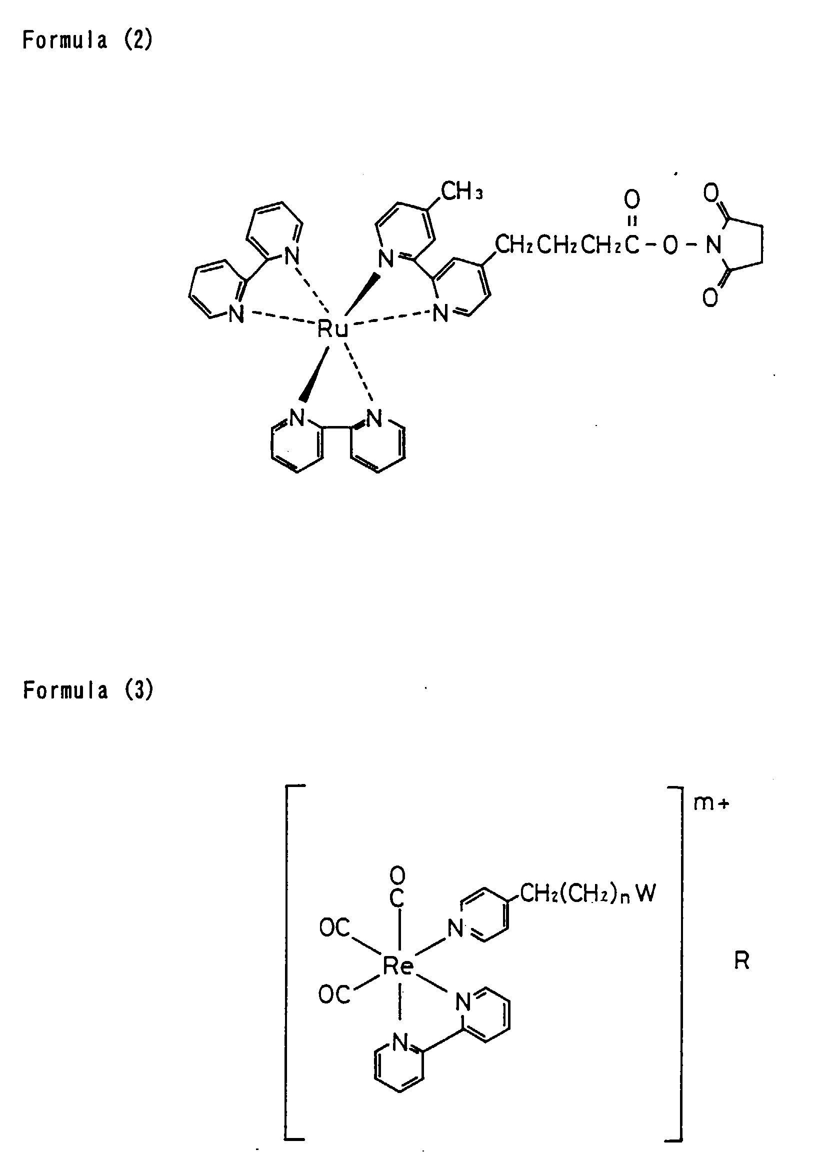

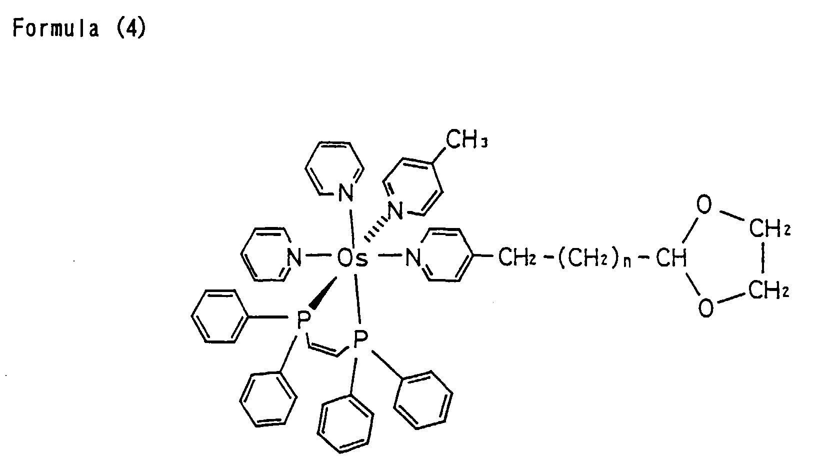

3. A method of detecting the light emission of electrochemiluminescence according to claim 1 or 2, wherein the electrochemiluminescent enhancer is tripropylamine (TPA) and/or triethylamine (TEA).

4. An electrochemiluminescent light detecting apparatus having electrodes mounted in a cell into which a liquid specimen of an electrolyte composed of an electrochemiluminescent material and an electrochemiluminescence enhancer and a light detector for detecting the light emission of electrochemiluminescence from the electrochemiluminescent material which is excited by the reaction of production and elimination of ions from an electric reaction in the cell, comprising:
a controller for controlling a current which leads on the electrode through the liquid specimen.

5. An electrochemiluminescent light detecting apparatus according to claim 4, wherein the electrochemiluminescent material is a ruthenium-tris-bipyridyl (Ru(bpy)₃²⁺ ) expressed by formula (1) or (2), a renium (Re) complex expressed by formula (3), where n is an integer and preferably, 2 or 3, m is whichever 1, 2, and 3 and preferably 1, W is selected from CHO, COOH, NH₃, and Br, and R is a negative ion, an osmium (Os) complex expressed by formula (4), or their combination:

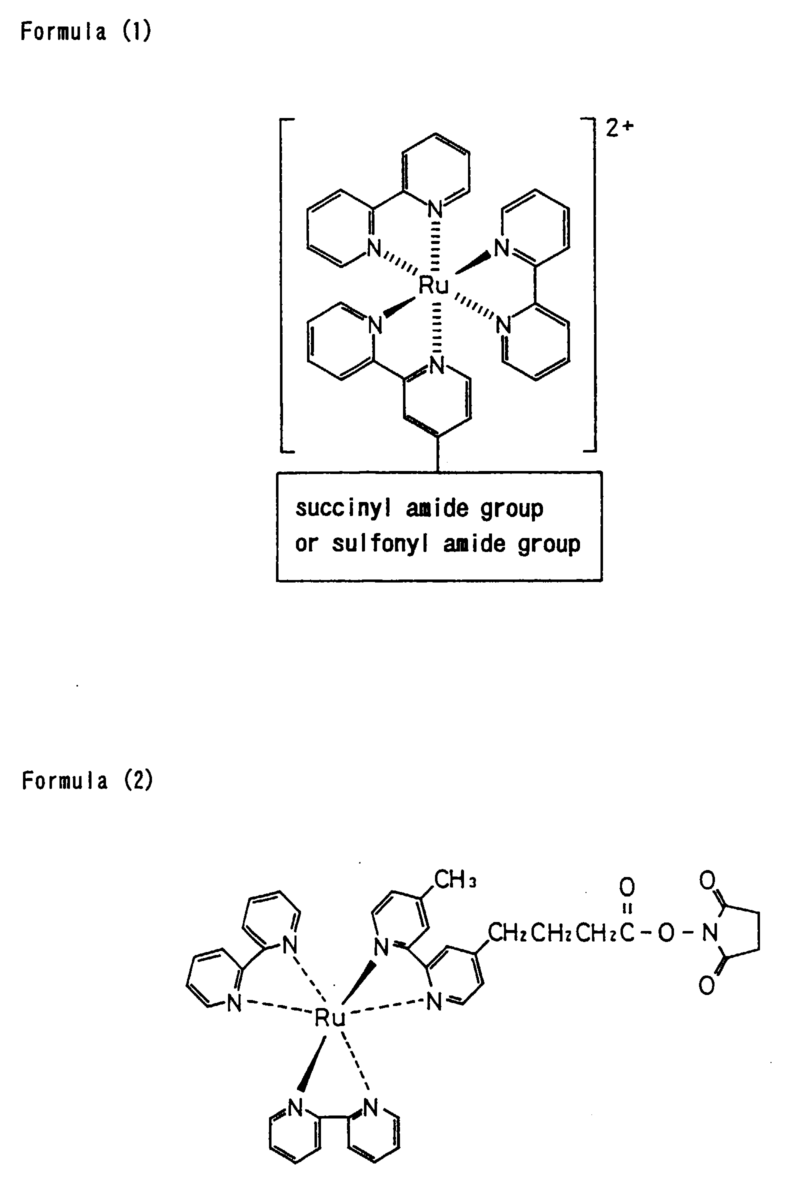

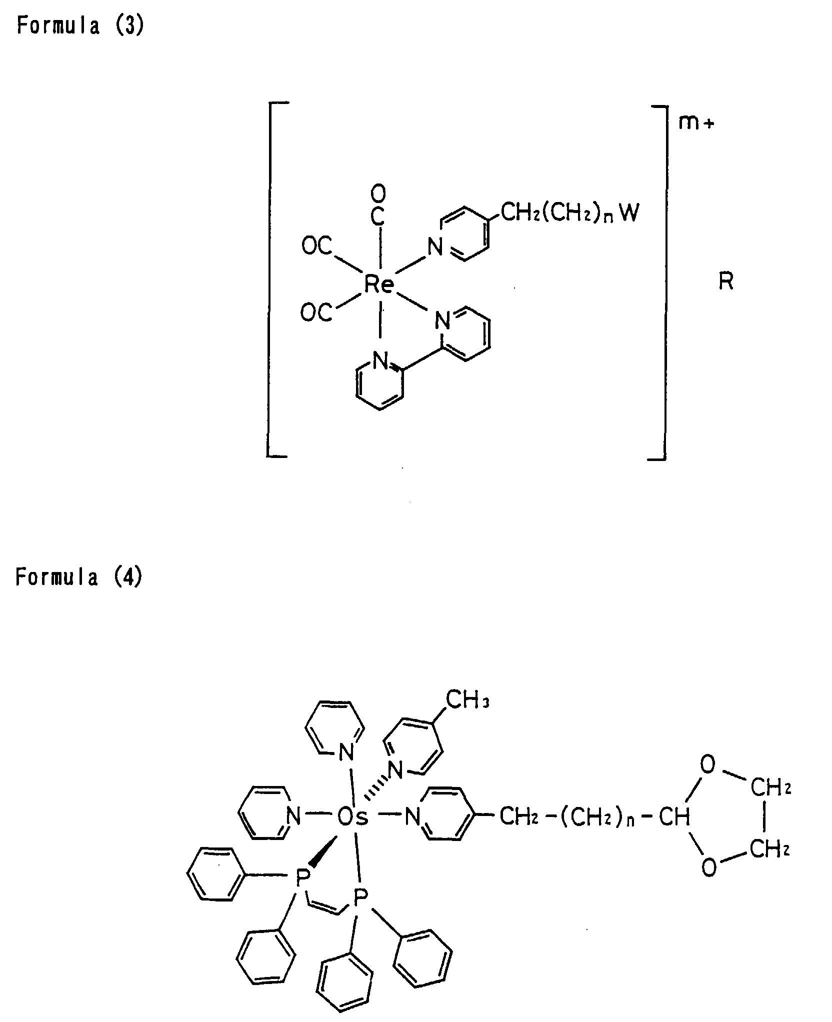

6. An electrochemiluminescent light detecting apparatus according to claim 4 or 5, wherein the electrochemiluminescent enhancer is tripropylamine (TPA) and/or triethylamine (TEA).

7. An electrochemiluminescent light detecting apparatus according to any of claims 4 to 6, wherein the light detector is a photomultiplier and/or a photodiode.
